# EUROPÄISCHE PATENTSCHRIFT

(11) **EP 1 778 519 B1**
(45) Veröffentlichungstag und Bekanntmachung des Hinweises auf die Patenterteilung: **11.11.2009**
(21) Anmeldenummer: 05775025.9
(22) Anmeldetag: 08.07.2005
(51) Int. Cl.: B60N 2/30

(54) **SITZ FÜR MILITÄRISCHE UND ZIVILE RAD- UND KETTENFAHRZEUGE**
SEAT FOR MILITARY AND CIVIL WHEEL AND TRACK-TYPE VEHICLES
SIEGE POUR VEHICULES A ROUES ET VEHICULES CHENILLES, MILITAIRES ET CIVILS

(30) Priorität: 12.07.2004 DE 102004035145
(43) Veröffentlichungstag der Anmeldung: 02.05.2007
(73) Patentinhaber: König Komfort-und Rennsitze GmbH, 74360 Ilsfeld (DE)
(72) Erfinder: HAGENLOCHER, Martin, 73655 Plüderhausen (DE); HILSER, Patrice, 71717 Beilstein (DE)
(74) Vertreter: Weller, Wolfgang
(86) Internationale Anmeldenummer: PCT/EP2005/007411
(87) Internationale Veröffentlichungsnummer: WO 2006/005539

(56) Entgegenhaltungen:
- DE-A1- 3 820 658
- DE-A1- 10 144 078
- DE-A1- 19 512 012
- DE-A1- 19 922 645
- DE-A1- 19 925 306
- US-A- 5 695 245

## Beschreibung

Die Erfindung betrifft einen Sitz für militärische und zivile Rad- und Kettenfahrzeuge, mit einem Sitzteil und einer Rückenlehne, wobei die Rückenlehne ein erstes Lehnenteil und zumindest ein gegenüber dem ersten Lehnenteil höhenverstellbares, zweites Lehnenteil aufweist, wobei das zweite Lehnenteil in das erste Lehnenteil einfahr- bzw. ausfahrbar ist.

Derartige Fahrzeugsitze sind aus der DE 199 25 306 A1, der DE 199 22 645 A1, der DE 38 20 658 A1, der DE 101 44 078 A1 und der DE 195 12 012 A1 bekannt.

Die Rückenlehnen sind dabei zumindest aus zwei Lehnenteilen aufgebaut, einem ersten Lehnenteil gegenüber dem ein zweites Lehnenteil höhenverfahrbar ist. Manchmal trägt das zweite höhenverfahrbare Lehnenteil noch ein drittes Lehnenteil in Form einer zusätzlich höhenverstellbaren Kopfstütze. Im abgesenkten Zustand ruht eine Unterkante des absenkbaren ersten Lehnenteils auf einer oberen Kante des unteren ersten Lehnenteils.Es können dabei diese beiden Teile ineinander greifen bzw. Halterungen oder schienenartige Führungen des höhenverfahrbaren zweiten Lehnenteils sind in das erste Lehnenteil einfahrbar.

Bei der DE 199 25 306 A1 greifen erstes und zweites Lehnenteil sowie zweites Lehnenteil und Kopfstütze zahnartig ineinander.

Bei der DE 199 22 645 A1 umgreift das zweite Lehnenteil in Art eines umgekehrten U das erste Lehnenteil.

Ähnlich ist es bei der DE 101 44 078 A1 und bei der DE 195 12 012 A1, welche den nächstliegenden Stand der Technik bildet.

Bei der DE 38 20 658 A1 sind Teile der Rückenlehne soweit anhebbar, bis sie auf Höhe einer Kopfstütze zum Liegen kommen, um dann als Ruhepolster für den Kopf eines Fahrzeuginsassen zu dienen. Im abgesenkten Zustand steht die Kopfstütze als Lehnenteil über das andere Lehnenteil hinaus.

Das zweite höhenverfahrbare Lehnenteil, das zugleich eine integrierte Kopfstütze enthält, ist an die Oberkante des unteren ersten Lehnenteils heranfahrbar bzw. von dieser Oberkante abhebbar.

Ein Einsatz für militärische und zivile Rad- und Kettenfahrzeuge ist nicht erwähnt, ferner ist der Sitz so eingebaut, dass die darauf sitzende Person in Fahrtrichtung ausgerichtet ist. Es handelt sich um einen komfortablen Sitz für einen PKW.

Militärische Rad- und Kettenfahrzeuge sind nicht nur für den unmittelbaren Kampfeinsatz vorgesehen, sondern dienen auch zum Transport von Personen.

Aus der DE 203 12 277 U1 ist ein Sitz für ein gepanzertes Fahrzeug bekannt, der ein Sitzteil, eine Rückenlehne und zumindest eine eine Seite des Kopfbereiches abdeckende Kopfstütze aufweist. Die Kopfstütze weist zumindest einen U-förmig ausgebildeten, insbesondere gepolsterten Bügel auf, der im Bereich seitlich der Augen einer auf dem Sitz befindlichen Person vorhanden ist. Dieser Sitz dient für eine seitwärts zur Fahrtrichtung ausgerichtete Personenbeförderung und schützt den Kopf vor entsprechenden seitlichen Krafteinwirkungen.

Aus der DE 103 17 314 B3 ist eine Einrichtung zur Positionierung eines Besatzungsmitgliedes eines Fahrzeuges im Bereich einer verschließbaren Dachluke bekannt, welche ein in dem Fahrzeug unterhalb der Dachluke hängend befestigtes Traggestell mit einem vertikalen Schenkel und einer damit mindestens mittelbar verbundenen horizontalen Standfläche aufweist. Eine mit dem vertikalen Schenkel senkrecht geführte, permanent in Richtung auf ihre oberste Position federnd belastende Rückenlehne einer Sitzformation für das Besatzungsmitglied ist vorgesehen. Dadurch ist der Sitz stufenlos zwischen einer Position verfahrbar, in der die Person sitzt, oder nahezu steht, um durch die Dachluke hindurchreichen zu können. Ein Gurtsystem hält die Person, die auf dem Sitz aufgenommen ist, fest.

Zum Beispiel im militärischen Bereich werden die Infanteristen zu den Einsätzen meist in Truppentransportfahrzeugen befördert. Dazu sitzen die voll ausgerüsteten Infanteristen meist seitwärts zur Fahrrichtung ausgerichtet jeweils in zwei gegenüberliegenden Reihen.

Für einen voll ausgerüsteten Infanteristen der Zukunft, sowie für Polizeikräfte, GSG und ähnliche Einsatztruppen wird ein Einsatzgewicht von bis zu 140 kg angenommen. Daher muss ein solcher Sitz entsprechend robust und stabil ausgebildet sein. Ein solcher Sitz muss sehr hohe Beschleunigungs- bzw. Verzögerungskräfte aufnehmen können, die insbesondere seitwärts gerichtet entstehen. Solche Kräfte treten beim Beschuss oder beim schnellen Fahren durch unebenes Gelände auf, aber auch insbesondere in einem Crashfall.

Da die Transportwege sehr lang sein können und im Ernstfall ein Verlassen des Fahrzeuges wegen der damit verbundenen Gefahr nicht möglich ist, soll ein solcher Sitz einen gewissen Komfort zeigen und auch eine Anpassungsfähigkeit an die aufzunehmende Person aufweisen, um Ermüdungserscheinungen entgegenzuwirken. Bei einem Einsatz in Gebieten mit hohen Temperaturen, ggf. im Zusammenhang mit dem damit verbundenen körperlichen Stress im Kampfeinsatz soll es möglich sein, eine Abführung der Körperwärme zu ermöglichen.

Es ist daher Aufgabe der vorliegenden Erfindung einen Sitz für militärische und zivile Rad- und Kettenfahrzeuge zu schaffen der für die rauen Einsatzbedingungen ausgelegt ist, und der flexibel an die Einsatzumstände und die Gegebenheiten der zu befördernden Person anpassbar ist.

Erfindungsgemäß wird die Aufgabe dadurch gelöst, dass das zweite Lehnenteil Vollständig in das erste Lehnenteil ein fahrbar ist.

Ein Vorteil dieser mehrteiligen Lehne besteht darin, dass diese optimal an die Größe insbesondere die Höhe des Rückens der Person angepasst werden kann. Das erste Lehnenteil schafft quasi eine Art "Grund"-Rückenabstützung unabhängig wie groß die Person ist. Das höhenverfahrbare zweite Lehnenteil kann hochgefahren oder abgesenkt werden, um je nach Größe des Rückens der Person eine optimale Abstützung des Rückens zu ermöglichen.

Ein weiterer Vorteil besteht ferner darin, dass damit auch flexibel an die jeweilige Situation angepasst werden kann. Soll der Person im oberen Rücken bzw. Schulterbereich eine maximale Bewegungsfreiheit zur Verfügung stehen, bspw. um Gegenstände zu ergreifen oder um vom Innenraum des Fahrzeuges aus Kampfhandlungen durchzuführen, die durch Feuerungstürme oder Feuerungsöffnungen hindurch ablaufen, kann das zweite Lehnenteil maximal weit abgesenkt werden. Der Zugriff auf hinter dem Sitz befindliche Verstaubereiche wird zudem ungehindert möglich. Im eingefahrenen Zustand des zweiten Lehnenteils ist eine kompakte Baueinheit vorhanden, die wenig raumerfüllend ist.

Durch das Einfahren des zweiten Lehnenteils in das erste Lehnenteil sind auch zugleich konstruktionsbedingt Führungsmöglichkeiten geschaffen, um diesen Bewegungsablauf zu führen.

Soll eine komplette Abstützung insbesondere im Bereich der Schultern, bspw. auch während einer Ruhephase zur Verfügung stehen kann das zweite Lehnenteil entsprechend weit ausgefahren werden.

Ein weiterer Vorteil besteht darin, dass beim Beladen und Entladen des Fahrzeuges das zweite Lehenteil maximal weit abgesenkt werden kann, so dass entsprechende Laderäume im Bereich der Rückenlehne insbesondere hinter der Rückenlehne leichter zugänglich sind. Nach dem Beladen kann dann die jeweils optimale Lehnenhöhe in Abhängigkeit von der Person und/oder der Einsatzsituation gewählt werden.

In einer weiteren Ausgestaltung der Erfindung ist das höhenverfahrbare Lehnenteil derart ausgebildet, dass bei hochgefahrenem zweiten Lehnenteil in der Rückenlehne zumindest eine durchgehende Öffnung entsteht.

Diese Maßnahme hat den Vorteil, dass bei hochgefahrenem zweitem Lehnenteil eine durchgehende Öffnung entsteht die ein Austausch von Körperwärme, sei es zum Abkühlen sei es zum Erwärmen, ermöglicht. Dadurch erfolgt eine Belüftung des Rückens, auch bei nicht atmungsaktiver Bepolsterung. Die Öffnung kann schon vorher bestehen und durch Hochfahren des zweiten Lehnenteils freigelegt werden, und diese kann im ersten und/oder im zweiten Lehnenteil vorhanden sein bzw. durch Formgebung der ineinandergreifenden Lehnenteile realisiert werden.

Insbesondere bei längeren Transportzeiten entstehen im Rückenbereich schweißbildende Hitzestaustellen, deren Entstehen durch die Öffnungen entgegengewirkt werden kann.

In einer weiteren Ausgestaltung der Erfindung weist das zweite Lehnenteil zumindest eine durchgehende Öffnung auf, die beim Hochfahren des zweiten Lehnenteils freigelegt wird.

Diese Maßnahme hat den Vorteil, dass die Größe dieser Öffnung durch ein Hochfahren oder Absenken des zweiten Lehnenteils eingestellt werden kann. Es ist auch möglich die durchgehende Öffnung im ersten Lehnenteil vorzusehen und diese im eingefahrenen Zustand des zweiten Lehnenteils abzudecken bzw. dann durch das hochgefahrene zweite Lehnenteil nach und nach freizulegen.

Die zuvor erwähnte Maßnahme, wonach die Öffnung im zweiten hochfahrbaren Lehnenteil ausgespart ist, hat den Vorteil, dass das erste Lehnenteil entsprechend steif und kompakt ohne strukturschwächende Öffnungen ausgebildet sein kann.

In einer weiteren Ausgestaltung der Erfindung ist das zweite Lehnenteil etwa U-förmig ausgebildet, dessen U-Schenkel nach unten gerichtet sind.

Diese Maßnahme weist den Vorteil auf, dass der Zwischenraum zwischen den U-Schenkeln die zuvor erwähnte Öffnung bewerkstelligen kann. Die beiden Schenkel des "U" dienen als Anlagefläche für den Bereich längs und neben der Wirbelsäule, so dass bei hochgefahrenem zweitem Lehnenteil ausreichend Abstützfläche für den Rücken besteht, dennoch eine Bewegungsfreiheit für die Arme und Schultern besteht.

In einer weiteren Ausgestaltung der Erfindung weist die Rückenlehne eine höhenverfahrbare Kopfstütze auf.

Diese Maßnahme hat den Vorteil, dass zusätzlich noch eine Abstützung des Kopfbereiches bereitgestellt werden kann.

In einer weiteren Ausgestaltung der Erfindung ist die Kopfstütze höhenverfahrbar im zweiten Lehnenteil aufgenommen.

Diese Maßnahme zeigt den Vorteil, dass eine sehr flexible Anpassung an die Anatomie der sitzende Person und auch an die jeweilige Einsatzsituation gegeben werden kann, wobei das Anordnen der Kopfstütze in dem hochfahrbaren zweiten Lehnenteil dies konstruktiv besonders einfach ermöglicht.

In einer Ausgestaltung bietet eine optional zu verwendende Kopfstütze durch eine der Kontur des menschlichen Kopfes angepassten gebogenen Form Schutz für den Kopfbereich. Ein seitwärts gerichteter Peitscheneffekt im Crashfall wird somit verhindert. Diese optionale Kopfstütze findet Anwendung je nach verwendetem Rückhaltesystem.

In einer weiteren Ausgestaltung der Erfindung ist dazu vorgesehen, dass die Kopfstütze bei einem U-förmigen zweiten Lehnenteil in dem querverlaufenden Verbindungsabschnitt der Schenkel angeordnet ist.

In einer weiteren Ausgestaltung der Erfindung ist die Rückenlehne unabhängig vom Sitzteil verfahrbar.

Üblicherweise sind ja Rückenlehne und Sitzteil über ein Winkelscharnier miteinander verbunden, so dass eine Höhen- oder Horizontalverstellung der Sitzfläche zugleich eine entsprechende Verstellung der Rückenlehne nach sich zieht.

Die nunmehr vorgeschlagene Maßnahme der Verstellbarkeit der Rückenlehne unabhängig vom Sitzteil erhöht nun weiter die Flexibilität im Einsatz.

Ein besonderer Vorteil besteht bspw. bei dem zuvor erwähnten Beladungsvorgang. Hier kann die Rückenlehne unabhängig von der Stellung oder gar von dem Vorhandensein des Sitzteiles verfahren werden, um bspw. einen Stauraum hinter der Rückenlehne besser zugänglich zu machen.

Dazu ist besonders vorteilhaft, wenn die Rückenlehne in Richtung des Sitzteiles hin- und her verschiebbar ist.

So kann eine Person mit oder ohne Schutz- und/oder Funktionskleidung auf dem Sitz Platz nehmen und braucht dazu lediglich die Rückenlehne vor- oder zurückzuverschieben.

In einer weiteren Ausgestaltung der Erfindung ist das Sitzteil in den beidseits angeordneten Seitenteilen gelagert.

Diese Maßnahme hat den Vorteil, dass das Sitzteil, ggf. völlig unabhängig von der Rückenlehne in den beidseits angeordneten Seitenteilen gelagert ist, so dass ein kompakter Unterbau des Sitzes vorhanden ist. Dieser Unterbau kann die eingangs erwähnten hohen Kräfte bei einem Aufprall oder bei Beschuss aufnehmen, und dient gleichzeitig zum Auffangen der sitzenden Person bei einer Beschleunigung in seitlicher Richtung.

In einer weiteren Ausgestaltung der Erfindung ist das Sitzteil von den Seitenteilen abnehmbar ausgebildet.

Diese Maßnahme hat den Vorteil, dass bspw. beim Beladen des Fahrzeuges das Sitzteil abgenommen werden kann, so dass zwischen die Seitenteile eingetreten werden kann, um hinter der ggf. maximal abgesenkten Rückenlehne Beladungsvorgänge vorzunehmen.

Ein weiterer Vorteil besteht auch darin, das Sitzteil entsprechend einfach auszuwechseln.

Das Sitzteil kann z. B. auch als Toilettensitz ausgeführt werden.

In einer weiteren Ausgestaltung der Erfindung ist der Sitz in unterschiedlichen Höhen in den Seitenteilen lagerbar.

Diese Maßnahme hat den Vorteil, dass die flexible Anpassung an die Anatomie der darauf sitzenden oder ggf. stehenden Person angepasst werden kann.

Ein weiterer Vorteil besteht auch darin, dass bspw. zum Be- und Entladen sowohl die Rückenlehne als auch der Sitz in eine maximal abgesenkte Position gebracht werden kann, so dass ein entsprechender Bewegungsraum zur Verfügung steht.

In einer weiteren Ausgestaltung der Erfindung weisen die Seitenteile Führungen auf, in die das Sitzteil einschiebbar ist.

Diese Maßnahme hat den Vorteil, dass dieser Verschiebe- bzw. Abnehmvorgang sehr einfach durchzuführen ist, dennoch durch entsprechend robuste Ausbildung der Führungen ein kompakter Zusammenbau aus Sitz und Seitenteilen gewährleistet ist.

In einer weiteren Ausgestaltung der Erfindung ist das Sitzteil derart ausgeführt, dass es auf der einen Seite eine Sitzfläche aufweist und auf der anderen Seite eine Stehfläche aufweist.

Diese Maßnahme hat den Vorteil, dass der Sitz flexibel einsetzbar ist, und durch einfache Maßnahmen in die unterschiedlichen Benutzungspositionen gebracht werden kann. Zum Transport wird das Sitzteil so eingeschoben, dass die Sitzfläche nach oben weist, so dass darauf bequem gesessen werden kann. Im Kampfeinsatz, insbesondere wenn auf dem Sitzteil gestanden werden soll, wird das Sitzteil entsprechend mit der Stehfläche nach oben zwischen die Seitenteile eingebracht.

So kann die Stehfläche mit besonders zum Stehen geeigneten Oberflächen ausgestattet werden.

So können auf dem Sitz stehend Kampfhandlungen vorgenommen werden, bspw. durch eine Luke des Fahrzeuges hindurch.

Im Zusammenhang mit den unterschiedlichen Höhenniveaus der Führungen des Sitzteils, kann hier wieder auch flexibel an die Größe der Person bzw. die Art der Kampfhandlungen angepasst werden, also bspw. ob nur teilweise oder über größere Bereiche der Oberkörper aus dem Fahrzeug herausragen soll.

In einer weiteren Ausgestaltung der Erfindung ist das Sitzteil hochklappbar zwischen den Seitenteilen aufgenommen.

Diese Maßnahme hat u.a. den Vorteil, dass bspw. zum Be- oder Entladen des Innenraumes das Sitzteil hochgeklappt werden kann um mehr Raum zur Verfügung zu haben. Ein nur teilweises Hochklappen verstellt die Neigung der Sitzfläche zu Anpassung der Auflagefläche der Oberschenkel bei unterschiedlichen Beinlängen.

In einer weiteren Ausgestaltung der Erfindung sind mehrere Sitze nebeneinander in Modulbauweise angeordnet.

Diese Maßnahme hat den Vorteil, dass mit einer solchen Modulaufbauweise mehrere Sitze nebeneinander angeordnet werden könne, und je nach Größe des Fahrzeuges mehr oder weniger Personen nebeneinander aufgereiht sitzen können. Dies ergibt außerdem eine gegenseitige Abstützung der einzelnen Sitze.

In einer weiteren Ausgestaltung der Erfindung wird die Sitzreihe durch eine durchgehende Fußstütze für die Personen der gegenüberliegenden Reihe ergänzt und befestigt. Dies ergibt eine zusätzliche Stabilität und Bodenfreiheit.

Die Fußstütze kann als Luftführung zwecks Klimatisierung dienen.

In einer weiteren Ausgestaltung der Erfindung sind die Seitenteile als flächige Wände ausgebildet.

Diese Maßnahme hat den Vorteil, dass diese flächigen Wände einen guten Seitenhalt bilden.

In einer weiteren Ausgestaltung der Erfindung besteht ein Seitenteil aus zwei voneinander beabstandeten Wänden.

Diese Maßnahme hat den Vorteil, dass nicht nur besonders stabile Seitenteile gebildet sind, die auch den hohen seitlichen Belastungen wiederstehen, sondern das zusätzlich zwischen den Wänden Stauraum zur Verfügung steht, der ebenfalls benötigt wird.

In einer weiteren Ausgestaltung der Erfindung weisen die Seitenteile eine Oberkante auf, die zum Teil zumindest im Bereich der Hüfte einer sitzenden Person liegt.

In einer weiteren Ausgestaltung der Erfindung kann die Oberkante der Seitenteile auch bis zum Bereich des Brustkorbes hochgezogen sein.

Diese Maßnahmen haben den Vorteil, dass dadurch ein besonders guter seitlicher Halt gewährleistet ist.

Die Seitenteile können sich an der von der Rückenlehne abgewandten Seite verjüngen, so dass mehr seitliche Beinfreiheit vorhanden ist.

In einer weiteren Ausgestaltung der Erfindung ist der komplette Sitz in der Höhe verfahrbar.

Diese Maßnahme hat den Vorteil, dass ein Sitz, falls bspw. über dem Sitz ein Geschützturm vorhanden ist, in seiner Gesamtheit in der Höhe verfahrbar ist.

Der Sitz kann in einen Käfig montiert werden, in dem der Sitz in der Höhe verfahrbar ist. Dazu kann der Käfig an einer Fahrzeugdecke im Bereich einer Luke montiert werden. Dies ist beispielsweise bei dem Sitz für den Fahrer oder für den Kommandeur vorgesehen. Der Sitz kann in einem im Käfig montierten Schlitten vertikal entweder mechanisch, elektrisch oder hydraulisch in der Höhe verstellt und bewegt werden. Bei Notsituationen kann der Sitz entkoppelt werden und je nach verwendeter Hebelmechanik innerhalb von einer Sekunde in eine Ausgangsposition unter Luke abgesenkt werden. Dazu kann das Sitzteil mittels eines Schnellverschlusses vom Schlitten entkoppelt werden, wodurch diese Notbergesituation nochmals erheblich verbessert wird.

In einer weiteren Ausgestaltung der Erfindung ist die Rückenlehne unabhängig vom Sitzteil höhenverfahrbar.

Diese Maßnahme hat den Vorteil, dass beispielsweise bei notwendigen Bergesituationen im Fahrzeug Rückenlehne und Sitzteil voneinander getrennt werden können, um diesen Bergevorgang zu erleichtern.

Die beengten Raumverhältnisse, insbesondere der Fahrerplätze in diesen Fahrzeugen erlauben bislang nur das Ein- bzw. Aussteigen über die Luke. Kommt es jedoch zu Situationen, bei denen beispielsweise der Fahrer innerhalb des Fahrzeugs geborgen werden muss, sei es durch Verletzungen oder aber, dass das Fahrzeug durch Überschlag nicht über die Luke verlassen werden kann, ist dies nunmehr durch diese Ausgestaltung möglich. Die Lehne kann vom Sitzteil abgehoben oder wegbewegt werden, so dass ein ausreichender Zwischenraum zwischen Sitzteil und Rückenlehne entsteht, um eine Person zu bergen.

Derartige Sitze weisen in an sich bekannter Weise zusätzlich ein Gurtsystem auf, um die Person auf dem Sitz zu halten. Die nunmehr sehr kompakte robuste und flexible Ausgestaltung des erfindungsgemäßen Sitzes erlaubt unterschiedliche Gurtsysteme anzubringen, wobei diese Gurtsysteme nicht nur so ausgelegt sein können, dass sie eine sitzende Person halten, sondern auch eine auf dem Sitz stehende Person halten.

Es können auch Gurtsysteme mit Airbag oder ähnlichen Vorrichtungen zur Abstützung des Kopfes verwendet werden.

In einer weiteren Ausgestaltung ermöglicht eine ausschiebbare oder ausklappbare Vorrichtung als Bestandteil der Lehne und/oder Kopfstütze und/oder der Seitenteile Seitenhalt des Kopfes und/oder des Brustbereichs.

Es versteht sich, dass die vorstehend genannten und nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen
- Fig. 1: schematisiert einen Schnitt durch eine Frontseite einer erfindungsgemäßen Sitzreihe mit drei nebenein- ander geordneten Sitzen, mit unterschiedlichen Aus- fahrstellungen des zweiten Lehnenteils bzw. der Kopf- stütze,
- Fig.2: eine Seitenansicht eines Sitzes auf dem eine Person Platz genommen hat, mit hochgefahrenem zweiten Leh- nenteil und ausgefahrener Kopfstütze,
- Fig. 3: eine Seitenansicht, teilweise im Schnitt, durch eine Wand eines Seitenteiles mit einem Sitzteil in zwei unterschiedlichen Positionen, mit der Rückenlehne ma- ximal nach hinten verfahren und dem zweiten Lehnen- teil maximal nach unten eingefahren, und
- Fig. 4: eine Draufsicht auf einen erfindungsgemäßen Sitz, teilweise im Schnitt.

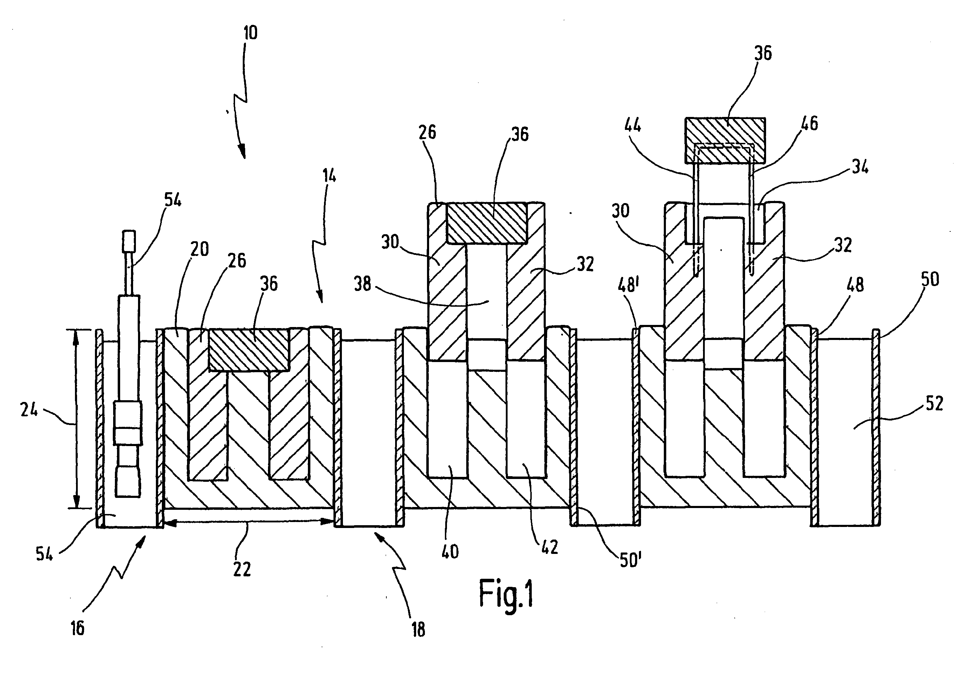

Ein in den Fig. 1-4 dargestellter erfindungsgemäßer Sitz ist in seiner Gesamtheit mit der Bezugsziffer 10 bezeichnet.

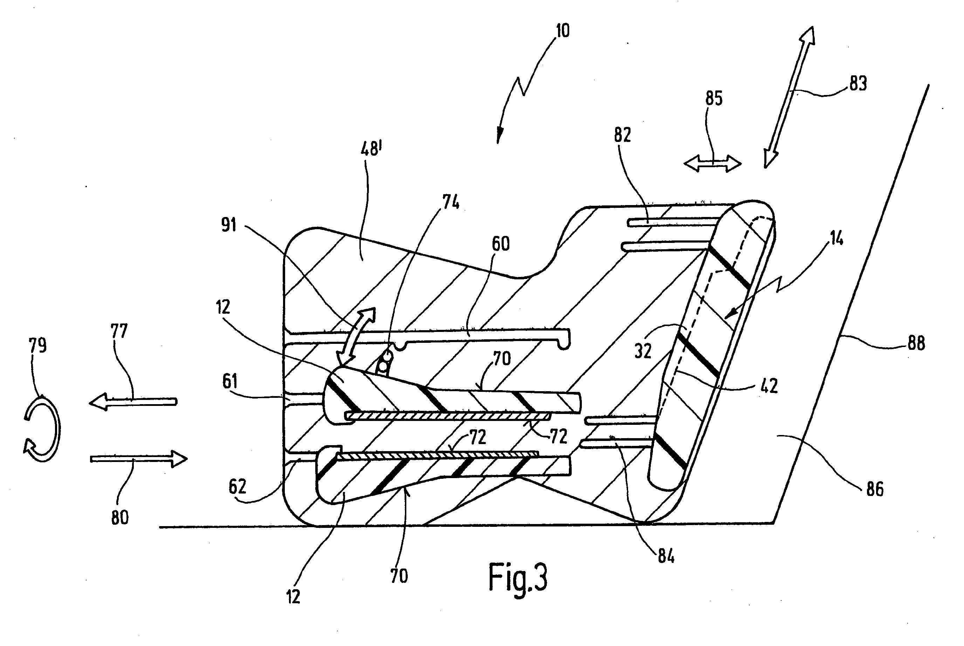

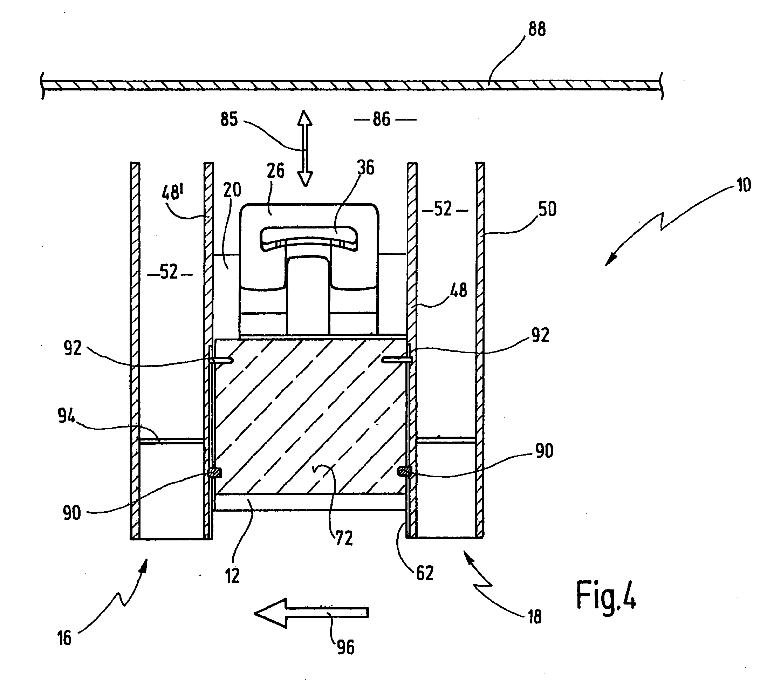

Ein Sitz 10 weist ein Sitzteil 12 (siehe Fig. 3 und 4) auf, eine Rückenlehne 14 und zwei Seitenteile 16 und 18 auf zwischen denen Sitzteil 12 und Rückenlehne 14 angeordnet sind.

Ist ein Sitz 10 als einzelner Sitz ausgebildet, wie er bspw. in Fig. 4 dargestellt ist, so weist er zwei seitliche Seitenteilen 16 und 18 auf, zwischen denen sich das entsprechende Sitzteil 12 erstreckt und das von diesen gehalten bzw. in diesen gelagert ist.

Sind mehrere Sitze aneinandergereiht, wie das bspw. in Fig. 1 dargestellt ist, so dient ein Seitenteil, hier das Seitenteil 18 des ersten Sitzes 10 der Reihe zugleich auch als ein Seitenteil des nächst danebenliegenden Sitzes.

Wie aus Fig. 1 zu erkennen, kommen eine Reihe von drei Sitzen mit insgesamt vier Seitenteilen aus.

Jede Rückenlehne 14 besteht aus einem ersten unteren Lehnenteil 20, dessen Breite 22 (siehe insbesondere Fig. 1) so ausgebildet ist, dass es sich zwischen zwei benachbarten Seitenteilen 16 und 18 erstreckt.

Die Höhe 24 ist so, dass diese sich ebenfalls etwa über die gesamte Höhe der Seitenteile 16 bzw. 18 erstreckt.

Im dargestellten Ausführungsbeispiel ist im ersteren unteren Lehnenteil 20 ein weiteres zweites Lehnenteil 26 integriert.

In anderen hier nicht dargestellten Ausführungsbeispielen ist es auch möglich, das zweite Lehnenteil als ein oberer aufgesetzter Abschnitt des ersten Lehnenteiles auszubilden.

Im dargestellten Ausführungsbeispiel ist das zweite Lehnenteil 26 als ein "U" ausgebildet, das zwei parallel zueinander verlaufende, nach unten gerichtete, im Abstand voneinander angeordnete Schenkel 30 und 32 aufweist, die am oberen Ende quer über einen Verbindungsabschnitt 34 miteinander verbunden sind.

Im Verbindungsabschnitt 34 ist eine höhenverschiebbare Kopfstütze 36 integriert. Die Kopfstütze 36 ist über in den Schenkeln 30 und 32 aufgenommenen Führungsstangen 44 und 46 geführt.

Der ausgesparte Bereich zwischen den Schenkeln 30 und 32 stellt eine durch das zweite Lehnenteil 26 hindurchgehende Öffnung 38 dar.

Die beiden Schenkel 30 und 32 sind in entsprechend ausgeformten Ausnehmungen 40 und 42 im ersten Lehnenteil 20 geführt und sind bündig mit der Rückenlehnfläche aufgenommen.

Anders ausgedrückt, befindet sich das zweite Lehnenteil 26 in seinem maximal abgesenkten oder eingefahrenen Zustand, wie er in Fig. 1 auf der linken Seite dargestellt ist, sind die Schenkel 30 und 32 bündig in den Ausnehmungen 40 und 42 aufgenommen, so dass eine durchgehende geschlossene Rückenlehnfläche der Rückenlehne 14 gebildet ist. Dies gilt gleichermaßen für die Kopfanlagefläche der Kopfstütze 36.

In Fig. 1 ist in der Mitte dargestellt, wie das zweite Lehnenteil 26 hochgefahren ist, wobei diese Stellung eine maximale Hochfahrstellung darstellt. Dazu sind entsprechende Anschläge vorhanden, die ein vollständiges Abziehen des zweiten Lehnenteils 26 vom ersten Lehnenteil 20 sperren. Zur Reparatur oder anderen Zwecken kann diese Sperre überwunden werden und das zweite Lehnenteil 26 kann auch vollständig abgenommen werden. Im dargestellten Ausführungsbeispiel sind die Schenkel 30 und 32 in den Seitenflanken der Ausnehmungen 40 und 42 geführt.

Es kann vorgesehen sein, zusätzliche Führungsstangen vorzusehen, um die Führung zu verbessern. Das Aus- und Einschieben, also das Hochfahren bzw. das Absenken des zweiten Lehnenteils 26 kann von Hand erfolgen oder gegebenenfalls auch über einen Stellmotor erfolgen.

In Fig. 1 ist auf der rechten Seite dargestellt, wie aus dem hochgefahrenen zweiten Lehnenteil 26 zusätzlich noch die Kopfstütze 36 ausgefahren, also hochgefahren ist. Das entspricht etwa einer maximalen Ausziehstellung der Kopfstütze 36.

Es sind selbstverständlich sämtliche Zwischenstellungen möglich, d.h. die Kopfstütze 36 kann auch schon bei nur teilweise hochgefahrenem zweiten Lehnenteil 26 ausgefahren werden oder auch aus der in Fig. 1 an der linken Seite dargestellten untersten Position des zweiten Lehnenteils 26.

Dies zeigt die besonders flexible Anpassung der Stützfläche der Rückenlehne 14 an die jeweiligen Gegebenheiten.

Aus der Schnittdarstellung von Fig. 1 und auch von Fig. 4 ist ersichtlich, dass jedes Seitenteil 16 und 18 aus zwei voneinander beabstandeten etwa deckungsgleichen Wänden 48 bzw. 50 bzw. 48' und 50' ausgebildet ist.

Die Wände 48 und 50 sind durch Verstrebungen 94 in Querrichtung verstrebt und stellen beidseits eines Sitzes einen Stauraum 52 zur Verfügung.

In Fig. 1 ist dargestellt, wie beispielsweise in einem derartigen Stauraum 52 ein Gewehr 54 aufgenommen ist. In Fig. 1 ist, der Übersicht halber, das Sitzteil 12 nicht dargestellt.

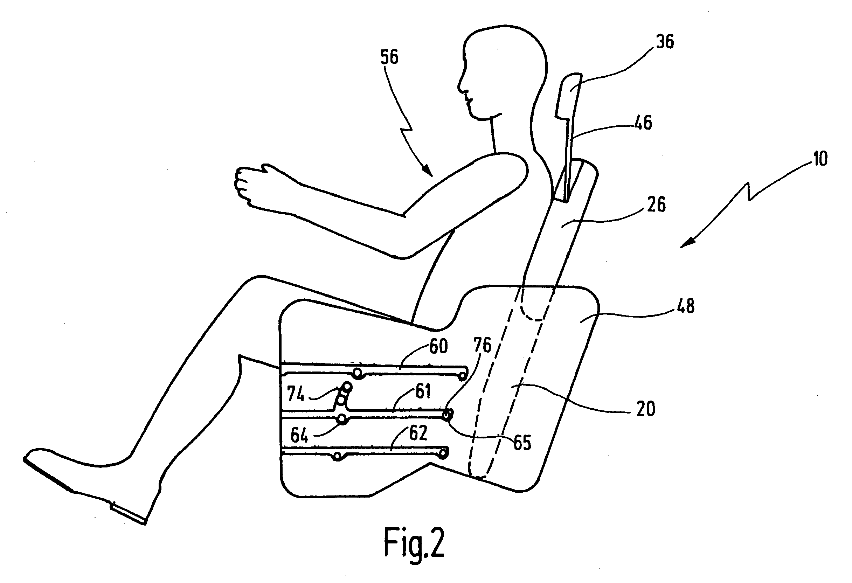

In Fig. 2 ist dargestellt, wie eine Person 56 auf einem erfindungsgemäßen Sitz 10 sitzt, wobei sich das zweite Lehnenteil 26 in seiner maximal hochgefahrenen Stellung befindet und außerdem noch die Kopfstütze 36 maximal ausgezogen ist, dies entspricht also der Stellung von Fig. 1 auf der rechten Seite.

In Fig. 2 ist dargestellt, dass auf der jeweiligen Innenseite einer Wand, hier der Wand 48, Führungen für das Sitzteil 12 vorgesehen sind, wobei im dargestellten Ausführungsbeispiel diese Führungen als drei übereinander geordnete, etwa horizontal verlaufende Nuten 60, 61 und 62 ausgebildet sind. Es ist auch möglich, anstatt der Nuten entsprechend auf die Wand aufgesetzte Führungsschienen vorzusehen.

In jeder der drei Nuten sind an deren Unterkante jeweils zwei Einsenkungen 64 bzw. 65 vorgesehen, die lediglich im Zusammenhang mit der mittleren Nut 61 bezeichnet sind.

Die Einsenkungen 64 und 65 dienen dazu, dass seitlich vom Sitzteil 12 vorstehende Bolzen 90, 92 (siehe Fig. 4) in diese Einsenkungen 64 und 65 einfahren, nachdem das entsprechende Sitzteil 12 etwa horizontal in die Nut 61 eingeschoben worden ist. Im seitlichen Boden der Einsenkung 64 und 65 können noch entsprechende Sacklochbohrungen 76 vorgesehen sein, in die die Bolzen 90, 92 einrasten können.

Im Zusammenhang mit der Nut 61 ist dargestellt, dass sich von der Oberseite der Nut 61 eine kreisförmige Führung 74 nach oben weg erstreckt.

Diese Führung 74 erlaubt, ein in die Nut 61 eingeschobenes Sitzteil an dessen Vorderkante anzuheben und in verschiedenen hochgekippten Stellungen zu arretieren, wozu dann wieder entsprechende Sacklochbohrungen vorhanden sind, in die die entsprechenden, gegebenenfalls federbelasteten Bolzen 90, 92 einrücken können.

Diese Schrägstellung des Sitzteiles 12 soll in einer Ruhephase eine entspannte Sitzposition ermöglichen.

In Fig. 3 ist eine der Fig. 2 vergleichbare, teilweise geschnittene Darstellung einer Wand 48' dargestellt, wobei hier wiederum die drei seitlich eingefrästen Nuten 60 bis 62 erkennbar sind.

In die mittlere Nut 61 ist ein Sitzteil 12 eingeschoben, das die Form eines Sitzkissens aufweist, dessen eine Fläche als gepolsterte Sitzfläche 70 und die andere Fläche als Stegfläche 72 in Form einer Metallplatte ausgebildet ist.

Das in die Nut 61 eingeschobene Sitzteil 12 ist in seiner Sitzposition dargestellt, und es kann, wie vorher in Zusammenhang mit Fig. 2 beschrieben, in der kreisförmigen Führung 74 abschnittsweise nach oben geklappt werden, wie das durch einen Doppelpfeil 91 dargestellt ist.

Es kann auch vorgesehen sein, das Sitzteil 12 völlig hochklappbar auszubilden, so dass es soweit hochgeklappt werden kann, dass es so hoch steht wie die entsprechenden Rückenlehne 14.

Das Sitzteil 12, kann, wie das in Fig. 3 durch einen Pfeil 77 dargestellt ist, dadurch von zwei Seitenteilen 16 und 18 abgenommen werden, dass dieses von Hand ergriffen und von den entsprechenden Nuten 61 abgezogen wird.

Anschließend kann beispielsweise das Sitzteil um 180° gedreht werden, wie das durch einen Pfeil 79 dargestellt ist und beispielsweise in die untere Nut 62, wie das durch einen Pfeil 80 dargestellt ist, wieder eingeschoben werden.

Nun weist die Sitzfläche 70 nach unten und die Stehfläche 72 weist nach oben.

In dieser Position kann eine Person auf dem Sitzteil 12 stehen und aus dem Fahrzeug heraus, beispielsweise über einen Geschützturm oder eine Luke Kampfhandlungen vornehmen.

Aus der Darstellung von Fig. 3 ist auch ersichtlich, dass die Rückenlehne in entsprechenden seitlichen Führungen 82 und 84 der Wände aufgenommen ist und horizontal verfahrbar ist, wie das durch einen Doppelpfeil 85 dargestellt ist.

Die Rückenlehne 14 kann also zwischen der in Fig. 3 dargestellten hinteren Position und einer weiter nach vorne verschobenen Position, wie sie beispielsweise in Fig. 2 dargestellt ist, hin- und herverschoben werden.

Wie eingangs erwähnt, ist dadurch ein gegebenenfalls hinter der Rückenlehne 14 vorhandener Stauraum 86 zwischen der Fahrzeugwand 88 besser zugänglich.

In Fig. 3 ist die Rückenlehne 14 dargestellt, wobei sowohl das zweite Lehnenteil als auch die Kopfstütze maximal absenkt sind, und entspricht also der Position von Fig. 1 auf der linken Seite.

Aus der Draufsicht von Fig. 4 ist ersichtlich, dass der hinter der Rückenlehne befindliche Stauraum 86 durch die Hin- und Herverschiebung entlang des Pfeiles 85 entsprechend günstig zugänglich ist.

In Fig. 4 ist das Sitzteil 12 in einer Position dargestellt, wie sie der Position des Sitzteiles von Fig. 3, wenn es in die Nut 62 eingeschoben ist, entspricht, d.h. dem Betrachter zeigt sich die Stehfläche 72.

In der Draufsicht von Fig. 4 ist ersichtlich, dass die jeweils seitlich vorstehenden Bolzen 90 und 92 in die entsprechenden Nuten 62 eingefahren sind und dass die Bolzen in die entsprechenden Sacklochbohrungen der Einsenkungen eingerastet sind.

Die doppelwandige Ausgestaltung der Seitenteile 16 und 18 erlaubt es, hohe Kräfte, die bei Einwirkungen längs der Fahrtrichtung 96 auftreten, aufzunehmen.

Die Seitenteile können speziell an die benötigten mitzuführenden Gegenstände angepasst werden. In einer Ausgestaltung können die Seitenteile so angepasst werden, dass keine Verletzungsgefahr der Personen besteht. Ein Herumfliegen der Gegenstände wird durch Halterungen vermieden, eine Verletzung an den gehalterten Gegenständen wird ebenso vermieden.

Es bestehen Integrationsmöglichkeiten von elektronischen Gerätschaften, welche sitzend oder stehend bedient werden können. Zusatzgeräte, aber auch Belüftung/Heizung/Licht können nach Bedarf eingebracht werden.

Der zuvor beschriebene Sitz weist eine sehr hohe Flexibilität bezüglich der Einstellung der Position von Sitzfläche und Rückenlehne auf, erlaubt eine Modulbauweise und erlaubt vor allem eine sehr robuste Bauweise, die den harten Einsatzbedingungen widerstehen können. Zugleich eröffnet die Konstruktion ausreichend Stauraum für die Gerätschaften und auch eine Möglichkeit, diese Stauräume leicht zugänglich zu machen.

Es kann vorgesehen sein, zusätzliche Fußstützen vorzusehen und die Polsterung, wie in Fig. 3 dargestellt, um den Kniekehlenbereich herumlaufen zu lassen, um den Unterschenkel bei einer Minenansprengung entsprechend auffangen zu können.

Im dargestellten Ausführungsbeispiel ist das Gurthaltesystem nicht dargestellt, es ist aber einleuchtend, dass ausreichend Verankerungspunkte, insbesondere im Bereich der Seitenteile 16 und 18 vorhanden sind, um entsprechende Gurte anzulenken.

Es stehen auch an der Rückenlehne, insbesondere am feststehenden unteren ersten Lehnenteil 20, ausreichend Anlenkungspunkte für ein Gurtsystem zur Verfügung.

Die zuvor beschriebene Ausgestaltung der Rückenlehne 14 kann auch bei solchen Sitzen eingesetzt werden, bei denen das Sitzteil über ein Winkelscharnier seitlich mit der Rückenlehne 14 verbunden ist. Die entsprechenden Seitenteile können durch Gurte bewerkstelligt werden, die sich diagonal zwischen Rückenteil und Sitzteil erstrecken. Die Vorteile bezüglich Flexibilität, Zugänglichkeit des Stauraumes und dergleichen ist dann auch bei diesem Sitzsystem vorhanden.

Es können konstruktionsbedingt Materialien für einen Sitz mit geringem Gewicht verwendet werden. Dies durch Mehrfachfunktionalität der einzelnen Bauteile und Baugruppen.

Der Sitz bzw. die Sitzmodule können auf dem Boden des Fahrzeuges verankert stehen, oder können über das stationäre erste Lehnenteil hängend an einer Wand des Fahrzeuges befestigt sein.

## Patentansprüche

1. Sitz für militärische und zivile Rad- und Kettenfahrzeuge, mit einem Sitzteil (12) und einer Rückenlehne (14), wobei die Rückenlehne (14) ein erstes Lehnenteil (20) und zumindest ein, gegenüber dem ersten Lehnenteil (20) höhenverfahrbares, zweites Lehnenteil (26) aufweist, wobei das zweite Lehnenteil (26) in das erste Lehnenteil (20) ein- bzw. aus diesem ausfahrbar ist, **dadurch gekennzeichnet, dass** das zweite Lehnenteil (26) vollständig in das erste Lehnenteil (20) einfahrbar ist.

2. Sitz nach Anspruch 1, **dadurch gekennzeichnet, dass** das zweite höhenverfahrbare Lehnenteil (26) derart ausgebildet ist, dass bei hochgefahrenem zweiten Lehnenteil (26) durch die Rückenlehne (14) zumindest eine durchgehende Öffnung (38) entsteht.

3. Sitz nach Anspruch 2, **dadurch gekennzeichnet, dass** das zweite Lehnenteil (26) zumindest eine durchgehende Öffnung (38) aufweist, die beim Hochfahren des zweiten Lehnenteils (26) freigelegt wird.

4. Sitz nach einem der Ansprüche 1 bis 3, **dadurch gekennzeichnet, dass** das zweite Lehnenteil (26) etwa U-förmig ausgebildet ist, dessen Schenkel (30, 32) nach unten gerichtet sind.

5. Sitz nach einem der Ansprüche 1 bis 4, **dadurch gekennzeichnet, dass** die Rückenlehne (14) eine höhenverfahrbare Kopfstütze (36) aufweist.

6. Sitz nach Anspruch 5, **dadurch gekennzeichnet, dass** die Kopfstütze (36) höhenverfahrbar im zweiten Lehnenteil (26) aufgenommen ist.

7. Sitz nach Anspruch 5 oder 6, **dadurch gekennzeichnet, dass** die Kopfstütze (36) bei einem U-förmigen zweiten Lehnenteil (26) in einem querverlaufenden Verbindungsabschnitt (34) der Schenkel (30, 32) angeordnet ist.

8. Sitz nach einem der Ansprüche 1 bis 7, **dadurch gekennzeichnet, dass** die Rückenlehne (14) unabhängig vom Sitzteil (12) verfahrbar ist.

9. Sitzteil nach einem der Ansprüche 1 bis 8, **dadurch gekennzeichnet, dass** die Rückenlehne (14) in Richtung des Sitzteiles (12) hin- und herverschiebbar ist.

10. Sitz nach einem der Ansprüche 1 bis 9, **dadurch gekennzeichnet, dass** das Sitzteil (12) in beidseits angeordneten Seitenteilen (16, 18) gelagert ist.

11. Sitz nach Anspruch 10, **dadurch gekennzeichnet, dass** das Sitzteil (12) von den Seitenteilen (16, 18) abnehmbar ausgebildet ist.

12. Sitz nach Anspruch 10 oder 11, **dadurch gekennzeichnet, dass** das Sitzteil (12) in unterschiedlichen Höhenpositionen zwischen den Seitenteilen (16, 18) lagerbar ist.

13. Sitz nach einem der Ansprüche 10 bis 12, **dadurch gekennzeichnet, dass** die Seitenteile (16, 18) Führungen aufweisen, in die das Sitzteil (12) einschiebbar ist.

14. Sitz nach einem der Ansprüche 10 bis 13**, dadurch gekennzeichnet, dass** das Sitzteil (12) derart ausgebildet ist, dass es auf einer Seite eine Sitzfläche (70) aufweist und auf der anderen Seite eine Stehfläche (72) aufweist.

15. Sitz nach einem der Ansprüche 10 bis 14, **dadurch gekennzeichnet, dass** das Sitzteil (12) hochklappbar zwischen den Seitenteilen (16, 18) aufgenommen ist.

16. Sitz nach einem der Ansprüche 1 bis 15, **dadurch gekennzeichnet, dass** mehrere Sitze (10) nebeneinander in Modulbauweise angeordnet sind.

17. Sitz nach einem der Ansprüche 10 bis 16, **dadurch gekennzeichnet, dass** die Seitenteile (16, 18) als flächige Wände (48, 50; 48', 50') ausgebildet sind.

18. Sitz nach Anspruch 17, **dadurch gekennzeichnet, dass** ein Seitenteil (16) bzw. (18) zwei voneinander beabstandete Wände (48, 50) bzw. (48', 50') aufweist.

19. Sitz nach einem der Ansprüche 10 bis 18, **dadurch gekennzeichnet, dass** die Seitenteile (16, 18) eine Oberkante aufweisen, die zumindest zum Teil auf Höhe der Hüfte einer darauf sitzenden Person liegt.

20. Sitz nach einem der Ansprüche 1 bis 19, **dadurch gekennzeichnet, dass** eine Fußstütze vorgesehen ist.

21. Sitz nach einem der Ansprüche 5 bis 19, **dadurch gekennzeichnet, dass** aus der Rückenlehne und/oder der Kopfstütze und/oder den Seitenteilen zusätzliche Abstützungen für den Kopf und/oder den Brustbereich ausschieb- bzw. ausklappbar sind.

22. Sitz nach einem der Ansprüche 1 bis 21, **dadurch gekennzeichnet, dass** er als Ganzes in der Höhe verfahrbar ist.

23. Sitz nach einem der Ansprüche 1 bis 22, **dadurch gekennzeichnet, dass** die Rückenlehne (14) unabhängig vom Sitzteil (12) höhenverfahrbar ist.

24. Sitz nach Anspruch 22 oder 23, **dadurch gekennzeichnet, dass** der Sitz in einem Käfig aufgenommen ist, in dem der Sitz vertikal verfahrbar ist.

## Claims

1. Seat for military and civil wheeled and tracked vehicles, comprising a seat part (12) and a backrest (14), the backrest (14) comprising a first backrest part (20) and at least one second backrest part (26) which is height-adjustable relative to the first backrest part (20), the second backrest part (26) being able to be inserted into the first backrest part (20) and/or withdrawn out of said backrest part, **characterized in that** the second backrest part (26) may be inserted completely into the first backrest part (20).

2. Seat according to Claim 1, **characterized in that** the second height-adjustable backrest part (26) is configured such that when the second backrest part (26) has been moved upwards, at least one through-opening (38) is produced by the backrest (14).

3. Seat according to Claim 2, **characterized in that** the second backrest part (26) has at least one through-opening (38), which is opened up when the second backrest part (26) is moved up.

4. Seat according to one of Claims 1 to 3, **characterized in that** the second backrest part (26) is of approximately U-shaped configuration, the limbs (30, 32) thereof being oriented downwards.

5. Seat according to one of Claims 1 to 4, **characterized in that** the backrest (14) has a height-adjustable headrest (36).

6. Seat according to Claim 5, **characterized in that** the headrest (36) is received in a height-adjustable manner in the second backrest part (26).

7. Seat according to Claim 5 or 6, **characterized in that** with a U-shaped second backrest part (26) the headrest (36) is arranged in a transversely extending connecting portion (34) of the limbs (30, 32).

8. Seat according to one of Claims 1 to 7, **characterized in that** the backrest (14) may be moved independently of the seat part (12).

9. Seat part according to one of Claims 1 to 8, **characterized in that** the backrest (14) may be displaced to and fro in the direction of the seat part (12).

10. Seat according to one of Claims 1 to 9, **characterized in that** the seat part (12) is mounted in side parts (16, 18) arranged on both sides.

11. Seat according to Claim 10, **characterized in that** the seat part (12) is configured to be removable from the side parts (16, 18).

12. Seat according to Claim 10 or 11, **characterized in that** the seat part (12) may be mounted in various vertical positions between the side parts (16, 18).

13. Seat according to one of Claims 10 to 12, **characterized in that** the side parts (16, 18) comprise guides into which the seat part (12) may be inserted.

14. Seat according to one of Claims 10 to 13, **characterized in that** the seat part (12) is configured such that it comprises a seating surface (70) on one side and a standing surface (72) on the other side.

15. Seat according to one of Claims 10 to 14, **characterized in that** the seat part (12) is received in a manner in which it may be tilted up between the side parts (16, 18).

16. Seat according to one of Claims 1 to 15, **characterized in that** a plurality of seats (10) are arranged adjacent to one another in modular fashion.

17. Seat according to one of Claims 10 to 16, **characterized in that** the side parts (16, 18) are configured as planar walls (48, 50; 48', 50').

18. Seat according to Claim 17, **characterized in that** a side part (16) and/or (18) has two walls (48, 50) and/or (48', 50') spaced apart from one another.

19. Seat according to one of Claims 10 to 18, **characterized in that** the side parts (16, 18) have an upper edge, which is located at least partially level with the hips of a person seated thereon.

20. Seat according to one of Claims 1 to 19, **characterized in that** a foot support is provided.

21. Seat according to one of Claims 5 to 19, **characterized in that** additional supports for the head and/or the chest region may be pushed out and/or folded out from the backrest and/or the headrest and/or the side parts.

22. Seat according to one of Claims 1 to 21, **characterized in that** it may be moved as a whole vertically.

23. Seat according to one of Claims 1 to 22, **characterized in that** the backrest (14) is height-adjustable independently of the seat part (12).

24. Seat according to Claim 22 or 23, **characterized in that** the seat is received in a cage, in which the seat may be moved vertically.

## Revendications

1. Siège pour véhicules à roues et véhicules chenillés militaires et civils, comprenant une partie d'assise (12) et un dossier (14), ledit dossier (14) comportant une première partie (20) et au moins une seconde partie (26) mobile en hauteur vis-à-vis de ladite première partie (20) du dossier, la seconde partie (26) du dossier pouvant être respectivement rentrée dans ladite première partie (20) du dossier, ou sortie de cette dernière, **caractérisé par le fait que** la seconde partie (26) du dossier peut être rentrée intégralement dans la première partie (20) dudit dossier.

2. Siège selon la revendication 1, **caractérisé par le fait que** la seconde partie (26) du dossier, mobile en hauteur, est réalisée de façon telle qu'au moins une ouverture ininterrompue (38), traversant le dossier (14), soit formée lorsque ladite seconde partie (26) dudit dossier est relevée.

3. Siège selon la revendication 2, **caractérisé par le fait que** la seconde partie (26) du dossier présente au moins une ouverture ininterrompue (38) dégagée lors du relevage de ladite seconde partie (26) du dossier.

4. Siège selon l'une des revendications 1 à 3, **caractérisé par le fait que** la seconde partie (26) du dossier est réalisée sensiblement sous la forme d'un U dont les branches (30, 32) sont dirigées vers le bas.

5. Siège selon l'une des revendications 1 à 4, **caractérisé par le fait que** le dossier (14) présente un appuie-tête (36) mobile en hauteur.

6. Siège selon la revendication 5, **caractérisé par le fait que** l'appuie-tête (36) est logé dans la seconde partie (26) du dossier, avec mobilité en hauteur.

7. Siège selon la revendication 5 ou 6, **caractérisé par le fait que**, en présence d'une seconde partie (26) de dossier configurée en U, l'appuie-tête (36) est disposé dans une zone (34) de solidarisation ou de liaison des branches (30, 32) qui s'étend dans le sens transversal.

8. Siège selon l'une des revendications 1 à 7, **caractérisé par le fait que** le dossier (14) est mobile indépendamment de la partie d'assise (12).

9. Siège selon l'une des revendications 1 à 8, **caractérisé par le fait que** le dossier (14) peut accomplir des va-et-vient en direction de la partie d'assise (12).

10. Siège selon l'une des revendications 1 à 9, **caractérisé par le fait que** la partie d'assise (12) est montée dans des parties latérales (16, 18) disposées de part et d'autre.

11. Siège selon la revendication 10, **caractérisé par le fait que** la partie d'assise (12) est réalisée pour pouvoir être dissociée d'avec les parties latérales (16, 18).

12. Siège selon la revendication 10 ou 11, **caractérisé par le fait que** la partie d'assise (12) peut être placée dans différentes positions en hauteur entre les parties latérales (16, 18).

13. Siège selon l'une des revendications 10 à 12, **caractérisé par le fait que** les parties latérales (16, 18) comportent des guides dans lesquels la partie d'assise (12) peut être insérée par coulissement.

14. Siège selon l'une des revendications 10 à 13, **caractérisé par le fait que** la partie d'assise (12) est réalisée de telle sorte qu'elle présente, d'un côté, une surface d'assise (70) et, de l'autre côté, une surface (72) à posture debout.

15. Siège selon l'une des revendications 10 à 14, **caractérisé par le fait que** la partie d'assise (12) est reçue entre les parties latérales (16, 18) avec faculté de repliage par pivotement vers le haut.

16. Siège selon l'une des revendications 1 à 15, **caractérisé par le fait que** plusieurs sièges (10) sont agencés en juxtaposition les uns à côté des autres selon un type de réalisation modulaire.

17. Siège selon l'une des revendications 10 à 16, **caractérisé par le fait que** les parties latérales (16, 18) sont réalisées sous la forme de parois aplaties (48, 50 ; 48', 50').

18. Siège selon la revendication 17, **caractérisé par le fait qu'**une partie latérale (16, respectivement 18) comprend deux parois (48, 50, respectivement 48', 50') distantes l'une de l'autre.

19. Siège selon l'une des revendications 10 à 18, **caractérisé par le fait que** les parties latérales (16, 18) présentent un bord supérieur situé, au moins en partie, à la hauteur de la hanche d'une personne qui y occupe une position assise.

20. Siège selon l'une des revendications 1 à 19, **caractérisé par** la présence d'un repose-pieds.

21. Siège selon l'une des revendications 5 à 19, **caractérisé par le fait que** des appuis supplémentaires, dédiés à la tête et/ou à la région pectorale, peuvent être respectivement sortis du dossier et/ou de l'appuie-tête et/ou des parties latérales, par coulissement ou par dépliage par pivotement.

22. Siège selon l'une des revendications 1 à 21, **caractérisé par le fait qu'**il est mobile en hauteur dans son intégralité ou sa globalité.

23. Siège selon l'une des revendications 1 à 22, **caractérisé par le fait que** le dossier (14) est mobile en hauteur indépendamment de la partie d'assise (12).

24. Siège selon la revendication 22 ou 23, **caractérisé par le fait que** ledit siège est logé dans une cage dans laquelle ledit siège est mobile verticalement.
